# FASCICULE DE BREVET EUROPEEN

(11) **EP 2 495 162 B1**
(45) Date de publication et mention de la délivrance du brevet: **08.05.2013**
(21) Numéro de dépôt: 12155135.2
(22) Date de dépôt: 13.02.2012
(51) Int. Cl.: B63B 1/12, B63B 35/00, F03D 1/00, F03D 11/04

(54) **Navire de transport sur un site "offshore" d'une éolienne et procédé pour sa mise en place**
Transportschiff einer Windkraftanlage an einen Offshore-Standort und Verfahren zu ihrer Aufstellung
Transport vessel of a wind turbine to an offshore site and method for its implementation

(30) Priorité: 01.03.2011 FR 1151640
(43) Date de publication de la demande: 05.09.2012
(73) Titulaire: STX France S.A., 44600 Saint Nazaire (FR)
(72) Inventeur: Cordier, Pierre, 44600 Saint-Nazaire (FR); Saint-M'Leux, René-Pierre, 44000 Reze (FR)
(74) Mandataire: Regimbeau

(56) Documents cités:
- WO-A1-03/055741
- WO-A1-2011/007066
- WO-A2-2009/153530
- US-A1- 2007 102 940

## Description

La présente invention se rapporte à un navire de transport sur un site "offshore", c'est-à-dire au large, d'une éolienne pourvue d'une fondation dite "gravitaire".

Elle se rapporte également à un procédé de mise en place, sur un site "offshore" d'implantation, d'une éolienne à l'aide d'un navire.

Actuellement, la plupart des parcs éoliens sont installés sur des sites offshore en deux étapes principales. La première consiste en une phase d'installation des fondations des éoliennes, tandis que la seconde consiste en l'installation des éoliennes proprement dites sur ces fondations, c'est-à-dire la mise en place de leur mât, de leur nacelle et de leurs pales.

Pour les fondations il existe plusieurs types de navires permettant de les transporter sur site et de les installer. Ces navires dépendent du type de fondation. Il peut s'agir d'une barge ou d'un navire de type "jack up" (auto-élévateur), d'une grue sur barge de type "shear leg", ou encore de navires divers équipés de grues.

Il existe plusieurs types de fondations pour les éoliennes. Ainsi, on parle de fondations mono-piles, jacket, gravitaires, tripodes, piles à succion, etc.

Pour les fondations les plus légères (à savoir les mono-piles et les tripodes, les navires à faible capacité de levage conviennent ; ils sont plus ou moins chers et assez répandus.

Pour les fondations les plus lourdes, on a besoin de navires à forte capacité de levage, à savoir plus de 3000 tonnes pour les fondations gravitaires. Ces derniers sont rares, donc peu disponibles, et chers.

Le temps d'opération en mer a nécessairement un coût plus élevé que les mêmes opérations réalisées à terre.

Les navires de type jack up passent un certain temps à se hisser sur leurs jambes et à les rétracter à chaque pose d'éolienne ou de fondations. Ils réalisent un montage pièce par pièce de l'éolienne au moyen de grues. Ce type de montage comporte des aléas liés à la multiplicité des opérations et celles-ci sont limitées par les conditions météorologiques, notamment les conditions de vent (surtout pour le montage des pales).

Afin de réduire le temps d'opération en mer, on a déjà pensé à transporter et installer la fondation et son éolienne associée d'un seul tenant vers le site d'installation offshore. L'assemblage complet de l'éolienne est réalisé par exemple dans un site portuaire à proximité du parc éolien. Un navire vient ensuite chercher l'éolienne assemblée à sa fondation, pour l'emmener sur site et la mettre en place.

Un premier exemple de ces techniques est donné dans le document de brevet US 2007/0102940, qui est considéré comme l'art antérieur le plus proche des objets des revendications 1 et 12 et qui décrit toutes les caractéristiques de leurs préambules.

D'autres exemples de telles techniques peuvent être trouvés dans les documents des brevets WO 2001/34 977, WO 2001/59 489, US 7 234 409, FR 2 923 454 et WO 2010/02 87 62.

Ainsi, dans le premier de ces documents, on décrit un dispositif pour l'installation d'une éolienne sur un site offshore, qui permet son transport sans avoir à supporter intégralement le poids de cette éolienne.

Cette dernière est capable de flotter dès que sa fondation n'est pas ou peu remplie d'eau.

Dans certains modes de réalisation, le dispositif prend la forme d'un navire pourvu de mâchoires pour enserrer le mât de l'éolienne. Vu de dessus, ce navire a une forme de fourche en U avec une fente longitudinale dont les bords en regard présentent un écartement légèrement supérieur au diamètre du mât de l'éolienne.

Pour le transport, il est indiqué que la surface supérieure de la fondation vient en contact contre le fond du navire et y est fixée par câbles, des chaînes, ou des éléments similaires.

Si ce dispositif semble donner généralement satisfaction, l'opération consistant en la manipulation et la mise en place de l'éolienne sur le fond marin dans des conditions assurant une stabilité aussi parfaite que possible est perfectible.

En effet, le dépôt d'un colis lourd, tel qu'une éolienne pourvue de sa fondation sur le fond marin, à partir d'un navire en flottaison et donc mobile sur l'eau selon six degrés de mouvement, nécessite un outil à la fois rigide pour guider le colis et le stabiliser jusqu'à sa cible au fond de l'eau et souple pour que, une fois le colis déposé, le navire ne transmette pas d'efforts horizontaux excessifs à l'embase.

Ainsi, ce but est atteint conformément à la présente invention.

Ainsi, un premier objet de l'invention concerne un navire de transport sur un site "offshore" d'une éolienne pourvue d'une fondation dite "gravitaire", c'est-à-dire apte à stabiliser l'éolienne sur un fond marin sous l'effet de son propre poids additionné à celui de l'éolienne, ce navire, ayant, vu de dessus, la forme générale d'un "U", avec deux "branches" définissant des coques, ainsi qu'un pont de jonction qui les relie, l'espace qui sépare ces coques autorisant l'engagement dans celui-ci du mât de l'éolienne, caractérisé par le fait qu'il comporte une pluralité de "piles" rigides et verticales, qui traversent de part en part ledit navire, leur extrémité inférieure étant pourvue de moyens déformables de connexion à des complémentaires portés par ladite fondation, ces piles étant mobiles, à la demande, en direction verticale, de sorte que, par un mouvement de descente de ces piles, ladite éolienne est guidée et stabilisée lors de ce mouvement descendant, et que, par un mouvement ascensionnel, lesdites piles transmettent un mouvement ascendant à ladite éolienne.

Le navire en question peut être de type catamaran.

Ainsi, des piles, par exemple d'une cinquantaine de mètres de long, permettent d'obtenir cette rigidité pour poser la fondation d'une éolienne sur un fond jusqu'à 45 m.

Les moyens déformables de connexion, quand ils présentent une longueur d'une dizaine de mètres de long, permettent d'avoir une souplesse en évoluant dans un cône de liberté d'une dizaine de degrés correspondant aux mouvements horizontaux du navire liés à la performance du positionnement dynamique (1 ou 2 m d'excursion autour de la position cible).

Ce principe ne nécessite pas de moyens de compensation en pilonnements ou autres mouvements comme on en rencontre sur de nombreuses grues offshore qui déposent ou relèvent des fondations au fond de l'eau ou sur un autre navire.

Si quatre treuils, installés sur le navire, avec des câbles reliés à la fondation de l'éolienne étaient utilisés, on risquerait alors d'avoir des déplacements latéraux difficiles à contrôler, du fait des mouvements relatifs entre le navire en flottaison et l'éolienne en cours de descentes. Ces mouvements pourraient soit conduire à une instabilité de l'éolienne elle-même, soit à des contacts intempestifs entre le mât de l'éolienne et le navire, soit à une imprécision inacceptable pour le dépôt au fond de l'eau au niveau de la cible requise. De plus, le courant pourrait aussi amplifier ces décalages de positions latérales.

Selon d'autres caractéristiques avantageuses mais non limitatives :
- lesdites piles sont au nombre de quatre et sont positionnées, vues de dessus, aux quatre angles droits d'un quadrilatère fictif ;
- lesdites piles sont positionnées de telle sorte qu'elles bordent, pour certaines, ledit pont de jonction et, pour les autres, lesdites coques ;
- la longueur desdits moyens déformables est déterminée de manière à ce que ces moyens déformables compensent ou absorbent les mouvements du navire de sorte que le « colis » constitué par l'éolienne et sa fondation reste « stable » pendant la mise en place de la fondation sur le site « offshore ».
- il comporte des moyens d'entrainement des dites piles en translation verticale ;
- ces moyens comprennent des pignons qui engrènent avec des crémaillères portées par lesdites piles ;
- lesdits moyens déformables consistent en des élingues.
- lesdits moyens déformables sont pourvus à leur extrémité libre, d'un système de connexion à ladite fondation, ces moyens étant de préférence automatiques et actionnés à distance ;
- il comporte des moyens aptes à bloquer l'éolienne pendant son transport ;
- lesdits moyens consistent en des canaux formés dans la surface de la coque et présentant une orientation verticale, avec une ouverture dirigée vers le bas, tandis que la fondation comporte autant d'organes saillants, ainsi disposés qu'ils s'engagent dans lesdits canaux et viennent se verrouiller dans ceux-ci.
- il est de type semi-submersible.

Un autre aspect de l'invention se rapporte à un procédé de mise en place sur un site "offshore" d'implantation à l'aide d'un navire semi submersible conforme à l'une des caractéristiques ci-dessus, d'un colis composé d'une éolienne et de sa fondation, ledit colis étant "gravitaire", c'est-à-dire apte à couler dans l'eau et à se maintenir stable sur un fond marin, sous l'effet de son propre poids,.

Ce procédé est remarquable en ce qu'il comprend les étapes suivantes :
a/ déplacement du navire jusqu'à ce que l'extrémité inférieure des piles soit à l'aplomb ou sensiblement à l'aplomb des moyens complémentaires de connexion portés par la fondation ;
b/ descente des piles et connexion des moyens déformables auxdits moyens complémentaires ;
c/ remontée des piles avec l'éolienne connectée, la fondation de cette dernière restant toujours au moins partiellement submergée ;
d/ déplacement dudit navire vers le site d'implantation en augmentant son tirant d'eau pour améliorer sa stabilité ;
e/ positionnement du navire à l'aplomb de l'emplacement d'implantation ;
f/ descente des piles jusqu'à ce que la fondation repose sur le fond marin ;
g/ déconnexion des moyens déformables et retrait dudit navire (4).

Selon des caractéristiques avantageuses et non limitatives de ce procédé :
- entre les étapes d/ et e/, on augmente encore le tirant d'eau dudit navire ;
- l'on augmente ledit tirant d'eau en remplissant d'eau des compartiments de ballastage que comporte le navire ;
- après ladite étape f/, on remplit des compartiments de ballastage que comporte la fondation.

D'autres caractéristiques et avantages de la présente invention apparaîtront à la lecture de la description qui va suivre. Celle-ci sera faite en référence aux dessins annexés dans lesquels :
- les figures 1 et 2 sont des vues simplifiées, respectivement en perspective et de face, illustrant la construction, sur un site portuaire ou non, de la fondation d'une éolienne ;
- la figure 3 est également une vue en perspective et simplifiée d'un remorqueur déplaçant deux fondations en flottaison telles que celle de la figure 1 ;
- la figure 4 est une vue en perspective montrant l'assemblage d'une éolienne à l'aide d'une grue et de tronçons de mât portés par une barge sur un site dit d'assemblage, situé en zone portuaire ou non ;
- la figure 5 est également une vue en perspective montrant la fondation de l'éolienne en place sur une assise de calage, avant l'érection des tronçons de mât ;
- la figure 6 est une vue de dessus montrant le navire selon l'invention en opération d'approche de l'éolienne ;
- la figure 7 est une vue partielle, sensiblement similaire à la précédente, mais selon un autre angle de vue ;
- la figure 8 est une vue en perspective de l'éolienne et du navire, celui-ci étant montré sous la forme de traits fantômes ;
- la figure 9 est une vue en perspective de la fondation de l'éolienne et d'une partie de son mât, ainsi que des quatre piles qui équipent le navire de l'invention ;
- la figure 10 est une vue partielle selon un plan de coupe médian et vertical d'une de ces piles ;
- la figure 11 est une vue partielle de la fondation destinée à montrer des moyens permettant son calage relativement au navire ;
- la figure 12 est une vue sous un autre angle des moyens précédents qui coopèrent avec des fentes réalisées dans la coque du navire ;
- les figures 13 et 14 sont des vues en perspective simplifiées illustrant le transport de l'éolienne par le navire vers le site d'implantation ;

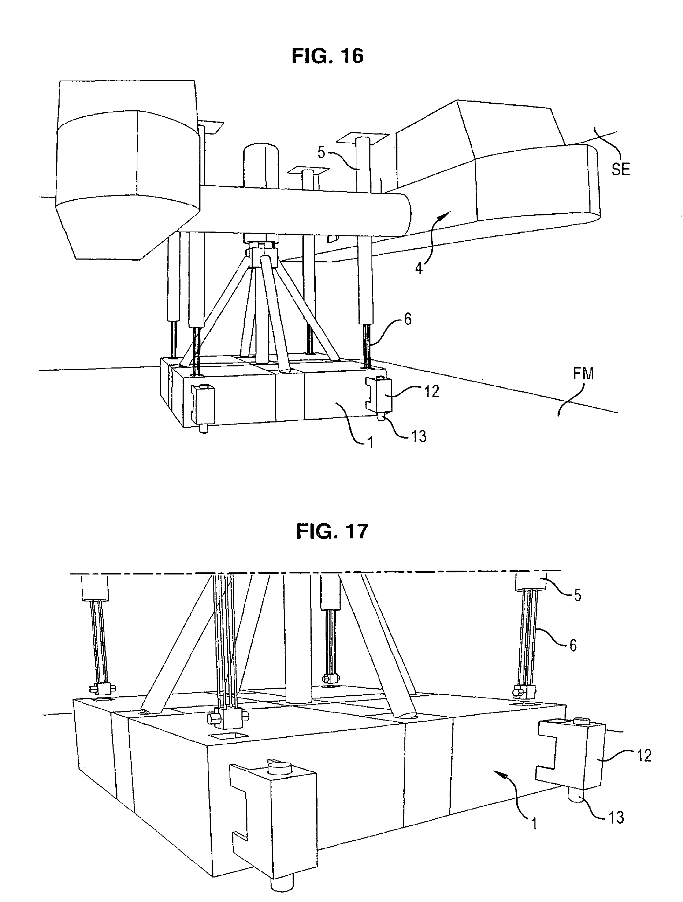

- les figures 15 et 16 représentent quant à elles l'opération de descente et de mise en place de l'éolienne sur le site offshore ;
- enfin, les figures 17 et 18 illustrent le retrait des piles du navire relativement à la fondation ainsi que l'évacuation du navire, laissant l'éolienne en place sur son site.

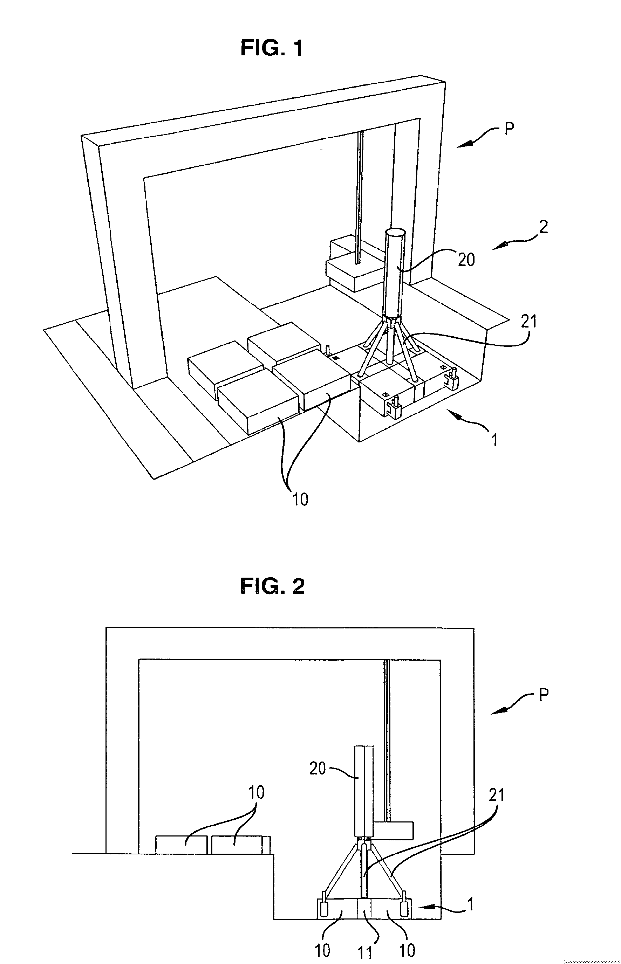

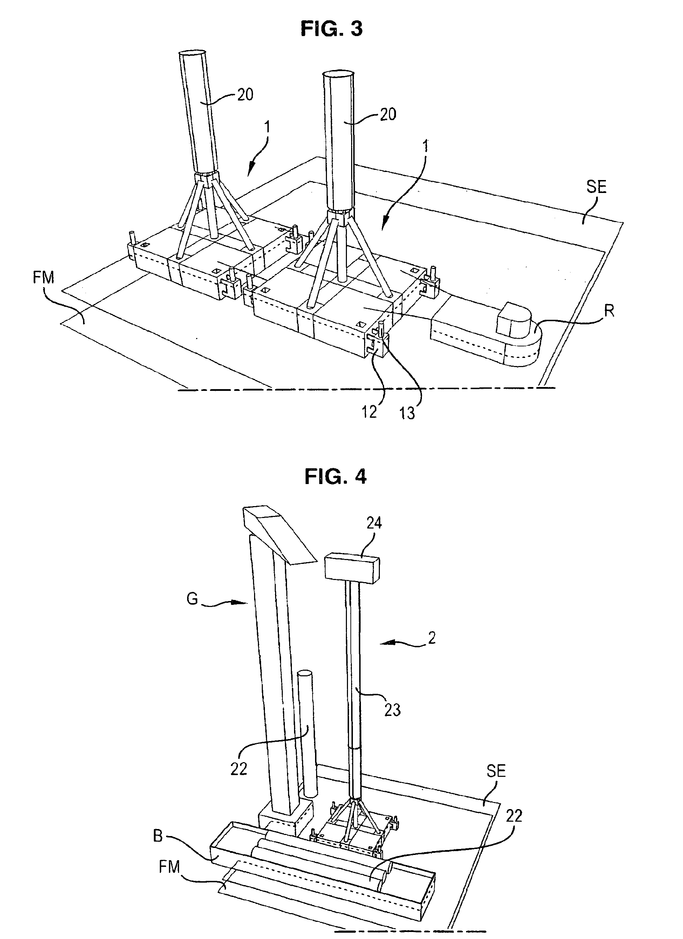

Aux figures 1 et 2, est représentée, très schématiquement, la fabrication d'une fondation d'éolienne, par exemple en fond de cale sèche d'une forme de construction, et qui est susceptible, le cas échéant, d'être transportée par une barge vers un site d'assemblage final de l'éolienne (Fig. 3).

De préférence, une telle fondation est composée d'une coque en acier, lestée de béton et surmontée d'un fût en acier lui aussi, de sorte que sa géométrie et sa masse soient compatibles avec les caractéristiques techniques du navire qui la transportera, notamment la largeur entre ses flotteurs et ses capacités de levage.

En variante, de telles fondations peuvent être fabriquées exclusivement en béton armé.

On notera l'existence, sur deux faces opposées verticales de cette fondation parallélépipédique, de fourreaux 12 dans lesquels sont emmanchés, avec possibilité de translation verticale, des pieux 13 (voir figure 3).

On expliquera plus loin dans la description l'intérêt de ces pieux.

Par ailleurs, la fondation n'a pas forcément une forme parallélépipédique.

Afin de permettre, d'optimiser le coût et de sécuriser, le transit de ces fondations 1, elles sont préférentiellement compartimentées en un certain nombre de cellules 10 jointives, selon un assemblage en croix 11, certaines étant remplies de béton tandis que les autres sont vides. Ces dernières sont toutefois prévues pour être ballastées par acceptation d'eau dans leur espace intérieur ou, pour certaines, remplies de béton dans une étape ultérieure.

A titre purement indicatif, à cette étape, la masse acier totale de cet ensemble peut être de 1300 tonnes, tandis que la masse de béton peut être de 2000 tonnes

Dans une étape ultérieure non représentée, la mise à flot de la fondation est réalisée, notamment en vue de son transit vers un site d'assemblage de l'éolienne.

On peut éventuellement, comme montré à la figure 3, relier deux fondations (ou plus) entre elles et déplacer l'ensemble avec un remorqueur R de type connu vers, par exemple, un lieu de stockage des fondations en zone portuaire.

Sur cette figure ainsi que les suivantes, on a référencé SE et FM respectivement la surface de l'eau et le fond marin.

A titre indicatif, le tirant d'eau des fondations lors de ce transfert est de l'ordre de 4,5 m.

Le transfert de la fondation est effectué jusqu'à un site d'assemblage où est présente une grue G apte à poursuivre et achever l'assemblage d'une éolienne 2 sur sa fondation 1. Pour ce faire, on a préalablement amené à proximité de la grue des tronçons 22 du mât 23 de l'éolienne 2. On a référencé 24 la nacelle de l'éolienne et, pour des raisons de simplification, les pales portées par celle-ci ne sont pas visibles ici. Ces éléments peuvent être amenés par la terre ou par la mer au moyen d'au moins une barge telle que celle B représentée sur la figure.

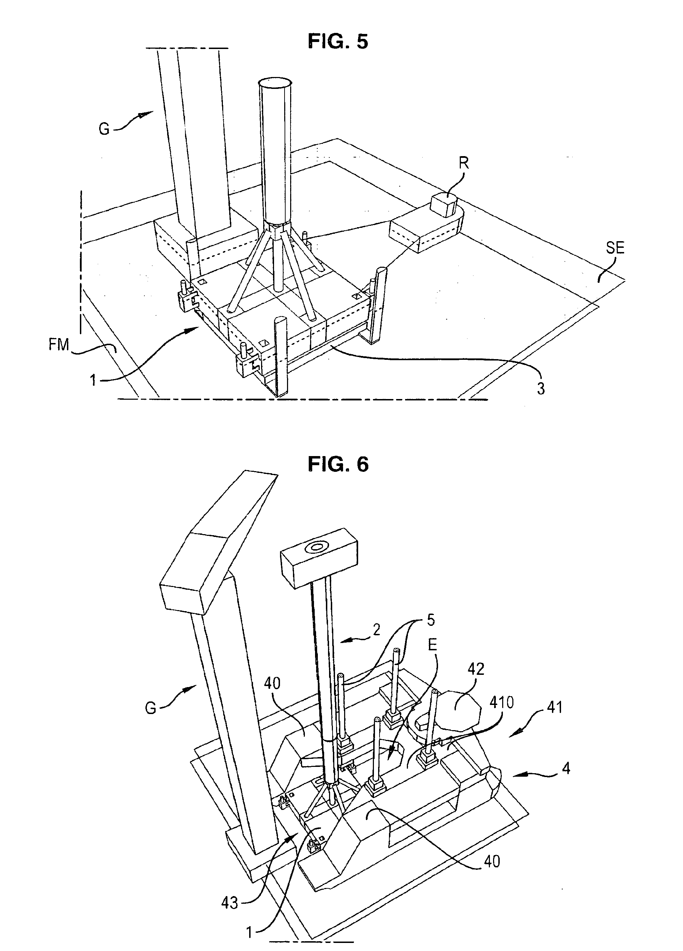

La figure 5 représente sensiblement la même situation que la figure précédente si ce n'est que la fondation a été mise en place sur une assise en béton ou gravier 3 permettant de stabiliser l'ensemble pendant cette phase d'assemblage.

Dans les deux situations des figures 4 et 5, on a pris soin de remplir avec de l'eau les compartiments de ballast qui étaient vides jusqu'ici et de compléter le lestage en remplissant certains compartiments avec du béton pour atteindre environ 3800 t de béton, lesquelles s'ajoutent à environ 1300 t d'acier précédemment citées.

Lorsque l'on considère également le mât, la nacelle et les pales, cette masse est augmentée d'environ 900 tonnes pour atteindre un total d'environ 6000 t. En vue du transit du « colis » composé de l'éolienne et de sa fondation, les compartiments de ballast d'eau sont alors totalement ou partiellement vidés de sorte que le poids apparent de ce colis atteigne environ 1400 t du fait de l'immersion totale ou partielle de la fondation..

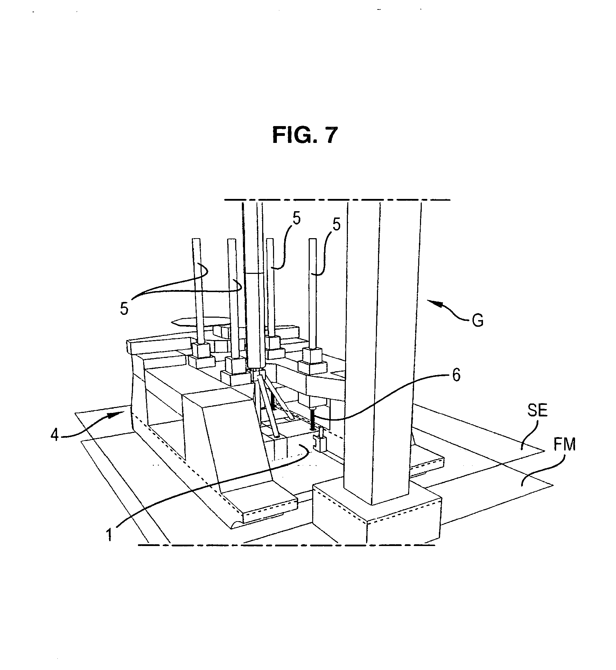

Aux figures 6 et 7, sont représentées, sous des angles différents, les phases d'approche d'un navire qui va permettre de transporter sur un site offshore l'éolienne 2 assemblée à sa fondation.

Préalablement, on précise que la fondation décrite plus haute est dite gravitaire, ce qui signifie qu'elle est stable sur le sol marin, sous l'effet de son propre poids additionné à celui de l'éolienne proprement dite. Elle est donc inapte à flotter dans quelle que condition que ce soit, dès lors que l'éolienne est mise en place.

Le navire précité, référencé 4 sur les figures, et de type catamaran semi-submersible, et a, vu de dessus, la forme générale d'un U dont les deux "branches" définissent des coques 40 parallèles, ainsi qu'un pont de jonction 41, qui les relie. Il existe donc un espace qui sépare les coques 40 et qui autorise l'engagement dans celui-ci du mât 23 de l'éolienne, tandis que la fondation 1 occupe un espace tantôt situé en dessous du navire, tantôt situé entre les flotteurs du navire, selon l'étape du procédé considéré.

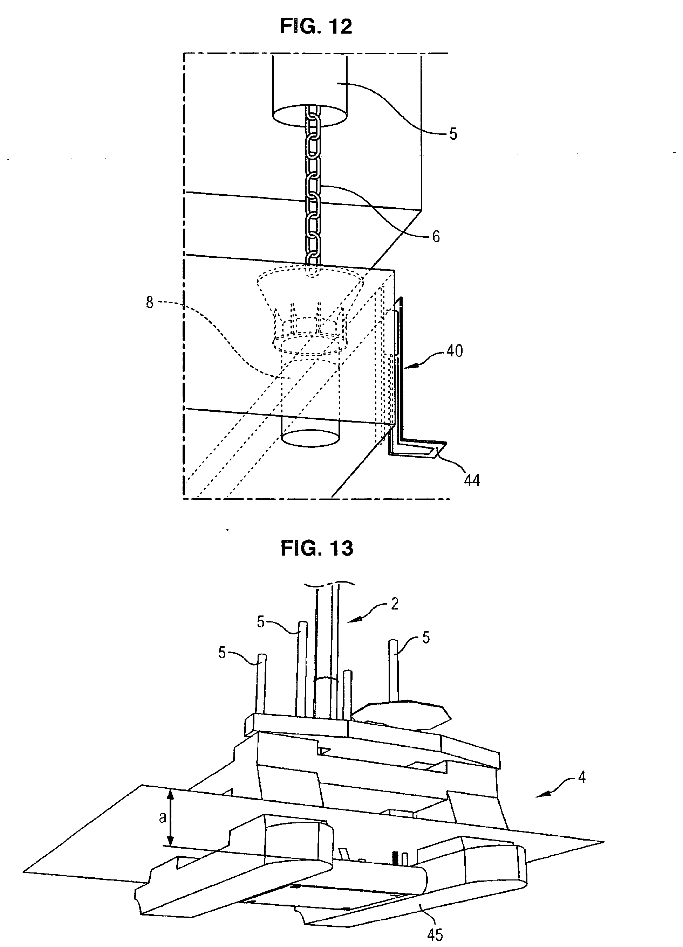

Une traverse rigidificatrice seulement visible à la figure 13 et référencée 45 permet d'améliorer la résistance du navire aux déformations et permet aussi d'améliorer l'hydrodynamisme de la fondation qui reste partiellement ou totalement immergée pendant le transport. Cette traverse est disposée en dessous et à distance du pont de jonction 41.

Ce pont accueille une superstructure 42 qui constitue le poste de pilotage du bateau.

Enfin, le pont de jonction 41 comporte un prolongement 410 en forme générale de U qui surplombe le vide et accueille des locaux techniques.

Une caractéristique particulièrement importante de l'invention consiste dans le fait que ce navire comporte une pluralité de piles rigides et verticales 5 qui le traversent de part en part.

Par le terme "piles", on entend des tubes rigides et verticaux, qui peuvent être pleins mais préférentiellement évidés au niveau de leur espace intérieur.

Dans le cas présent, ces piles présentent chacune une hauteur d'environ 55 m.

Elles sont au minimum au nombre de trois, mais préférentiellement au nombre de quatre. Dans ce cas, elles sont disposées, vues de dessus, aux quatre angles droits d'un quadrilatère fictif qui s'étend au niveau du prolongement 410 du pont de jonction 41. Ces piles sont actionnées par tout système mécanique 411 connu tel que par exemple pignons / crémaillère 53 qui permet de monter ou descendre l'ensemble des piles relativement au navire.

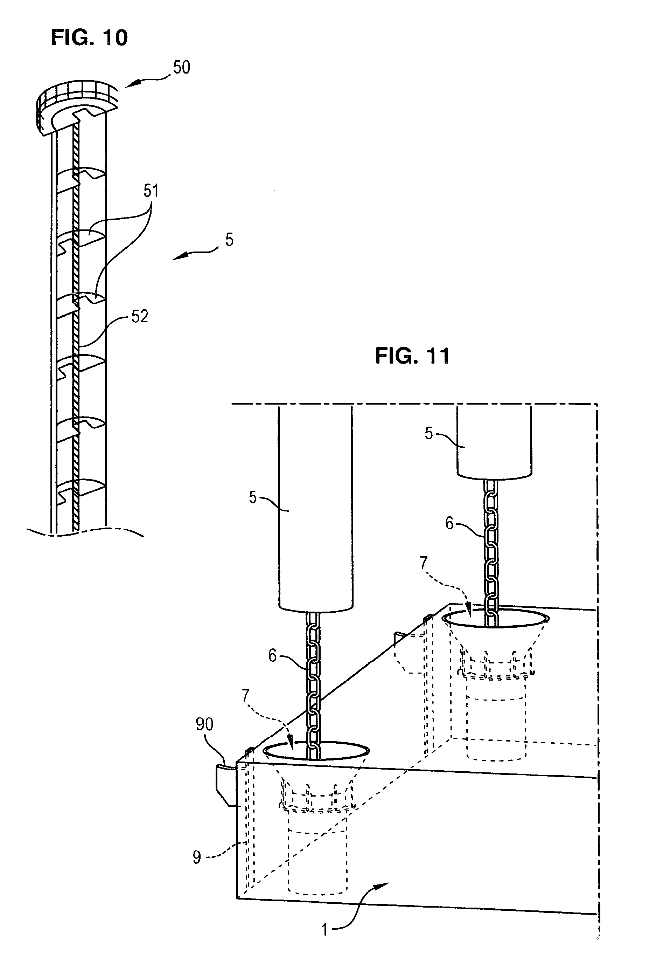

A la figure 10 est représenté en coupe un mode de réalisation possible d'une telle pile. Cette pile 5 est ici creuse. Elle comporte en son sommet une nacelle 50 et est pourvue intérieurement de plates-formes 51 rigidificatrices au travers desquelles il est possible de descendre via des ouvertures dans lesquelles est engagée une échelle.

Un tel système permet notamment de permettre une visite de sécurité afin de s'assurer que tout et toutes les pièces relatives aux piles fonctionnent correctement.

Toujours selon une revendication essentielle de l'invention, l'extrémité inférieure des piles est pourvue de moyens déformables 6 de connexion à des moyens complémentaires 8 portés par la fondation.

Il s'agit ici dans les modes de réalisation représentés d'élingues 6 constituées d'une chaîne formée d'un assemblage de maillons. Il pourrait toutefois s'agir de câbles ou de tout autre moyen déformable. A titre indicatif, la longueur de cette élingue est de l'ordre de 6 m.

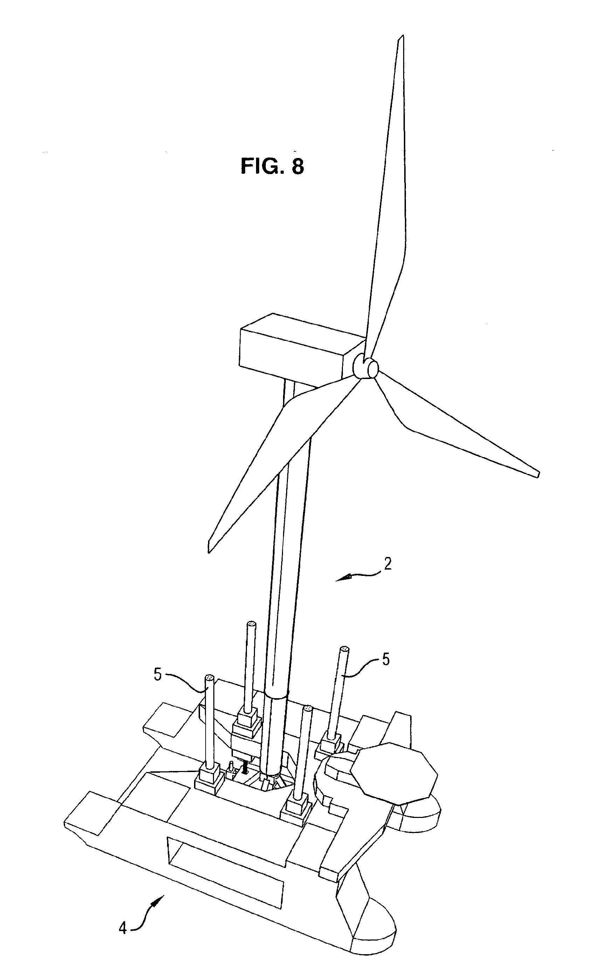

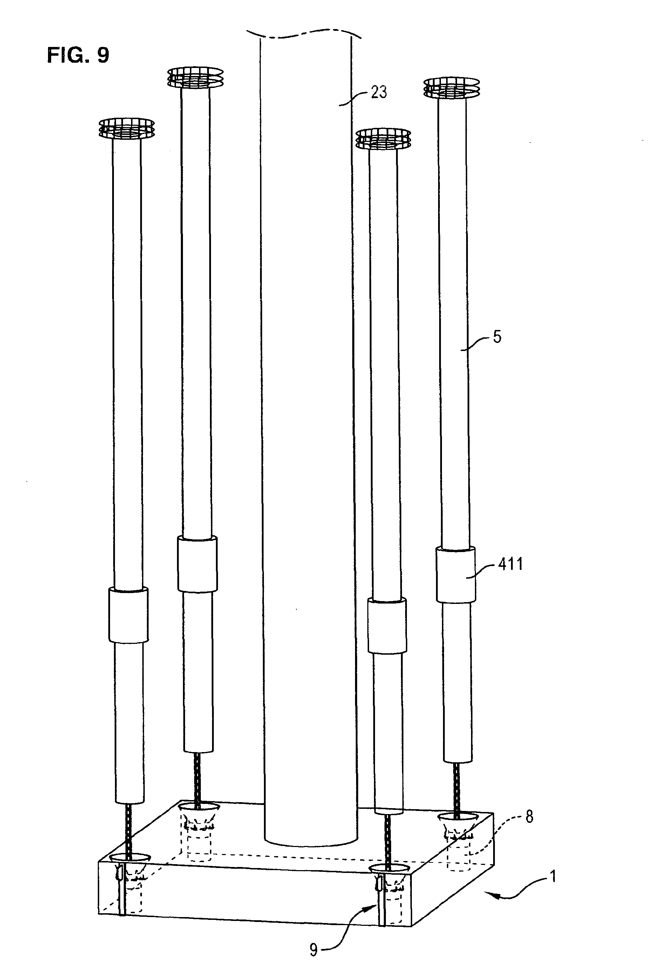

Les figures 8 et 9 permettent d'apprécier l'emplacement des piles 5, du système mécanique 411 solidaire du navire et des élingues 6 par rapport au navire et à la fondation.

En se reportant à la figure 9, on constate que la fondation 1 comporte au niveau de sa face supérieure et à proximité de ses quatre angles des puits 8 formés d'un tube creux qui émerge vers le haut par une forme en tronc de cône 80 de conicité divergente vers le haut, servant de points de levage. Un système de verrouillage 7 non visible, par exemple à crochet permet de connecter les élingues 6 auxdits points de levage 8 sur la fondation.

Lors du mouvement simultané de descente des piles 5 dont la disposition est juste à l'aplomb des puits 8, il est possible d'engager les élingues 6 dans les puits 8 et de les rendre solidaire par l'intermédiaire des moyens de verrouillage 7. Lorsque cette opération est effectuée, la fondation et l'éolienne associée se trouvent connectées au navire.

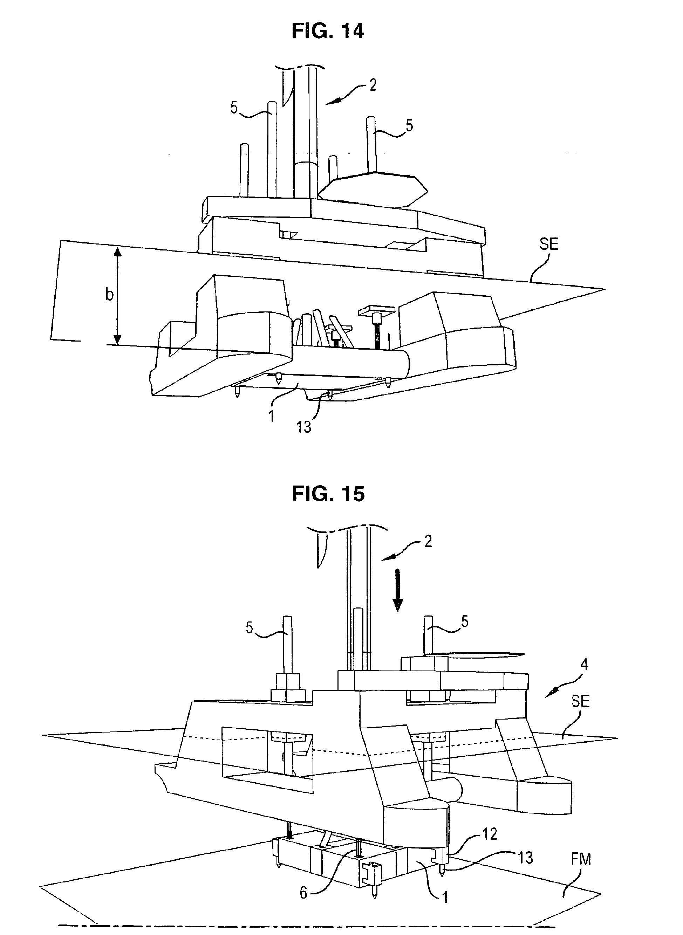

Il est alors possible de piloter la remontée des piles jusqu'à ce que la fondation 1 vienne en butée contre la coque du navire, ainsi que cela est visible à la figure 14. Il est possible de verrouiller l'éolienne au navire 4, par exemple en faisant usage de moyens représentés aux figures 9 et 12.

Il s'agit ici de canaux 44 formés dans chacune des coques du navire 4, présentant une orientation verticale avec une ouverture dirigée vers le bas, tandis que la fondation 1 comporte autant d'organes saillants 9, ainsi disposés qu'ils s'engagent dans les canaux 44 et viennent en butée contre le fond de ceux-ci. Le maintien dans cette position de butée est assuré par une pré-tension verticale dans le système mécanique de montée des piles, aucun mouvement vertical (selon la direction Z) de l'éolienne n'étant alors possible.

Plus précisément, les organes saillants sont pourvus de plaques 90 s'engageant dans les canaux 44.

Ce principe engendrant des efforts verticaux importants au niveau des élingues et des points de levage 8, (le dimensionnement des points de levage « portés » par la fondation étant également critique), une variante serait de mettre en place un cadre en partie supérieure des piles et un système de blocage des mouvements de la fondation dans le plan (selon les directions X et Y), par rapport au navire. Le degré de liberté dans la direction Z (vertical) de l'éolienne et sa fondation, par rapport au navire, étant ainsi libre.

Dans cette variante, le dimensionnement du système de levage est moins problématique puisque n'étant alors plus pré-contraint et ne reprend plus de moments dynamiques, mais seulement les seuls efforts dû au poids apparent du colis.

Ainsi arrimée au navire, la fondation présente un poids apparent de l'ordre de 1400 tonnes, en raison de la poussée d'Archimède qui s'exerce sur la fondation partiellement ou totalement immergée.

Le navire est alors déplacé de préférence en augmentant le tirant d'eau du navire 4 de manière à améliorer sa stabilité. Pour ce faire, le navire est de type semi-submersible, ce qui signifie que sa coque comporte des réservoirs de ballastage qu'il est possible de remplir avec de l'eau de mer.

Durant cette manoeuvre, le tirant d'eau est par exemple de 10 m.

Arrivé sur site, on commence par actionner les pieux 13 en descente relativement aux fourreaux 12 de la fondation 1 de manière à ce qu'ils soient saillants au-delà de la face inférieure de la fondation. Puis on se prépare alors à déplacer l'éolienne pour la mettre en place sur le fond marin FM. Pour cela, on augmente si nécessaire le tirant d'eau du navire, par exemple à 15m, et on pilote la descente simultanée des piles 5.

Une telle fondation, équipée de pieux mobiles en direction verticales, peut être utilisée indépendamment du navire décrit ici.

On comprend aisément que le dépôt d'un « colis lourd » tel que cette éolienne et sa fondation sur le fond marin à partir d'un navire 4 en flottaison (et donc mobile sur l'eau au gré des mouvements) nécessite un outil rigide qui guide le colis et le stabilise jusqu'à sa cible en fond d'eau.

Il s'agit en l'occurrence des piles 5. Cet outil doit toutefois être souple pour qu'une fois le colis déposé le navire ne transmette pas d'efforts horizontaux excessifs à la fondation.

En l'occurrence, il s'agit des élingues 6. Ces élingues permettent d'avoir cette souplesse en évoluant dans un cône de liberté d'une dizaine de degrés, ce qui correspond aux mouvements horizontaux du navire liés à la performance du positionnement dynamique du navire (1 ou 2 m d'excursion autour de la position cible). Cette technique ne nécessite pas de moyens de compensation en pilonnement ou autres mouvements, comme on en rencontre habituellement sur de nombreuses grues offshore qui déposent ou relèvent des colis au fond de l'eau ou sur un autre navire.

Lors de ce mouvement de descente, les pieux 13 préalablement ressortis de leur fourreau 12 viennent s'engager dans le fond marin FM, ce qui augmente notablement la stabilité de l'éolienne dans le plan sans perturber le sol sous la fondation. Plus la fondation 1 s'approche du fond marin FM, plus le pilonnement du navire s'en trouve réduit par effet de succion entre fond marin et fondation.

Ainsi, lors du contact entre la fondation et le sol, le choc s'en trouve réduit, ainsi que le risque de voir la fondation se soulever au dessus du sol après avoir été déposée. Au fur et à mesure du transfert de charge du navire vers le fond marin, le tirant d'eau du navire se réduit (de l'ordre de 2 m au total). Une fois cette opération effectuée, on déconnecte à distance les moyens de liaison 7 et on remonte l'outil de levage.

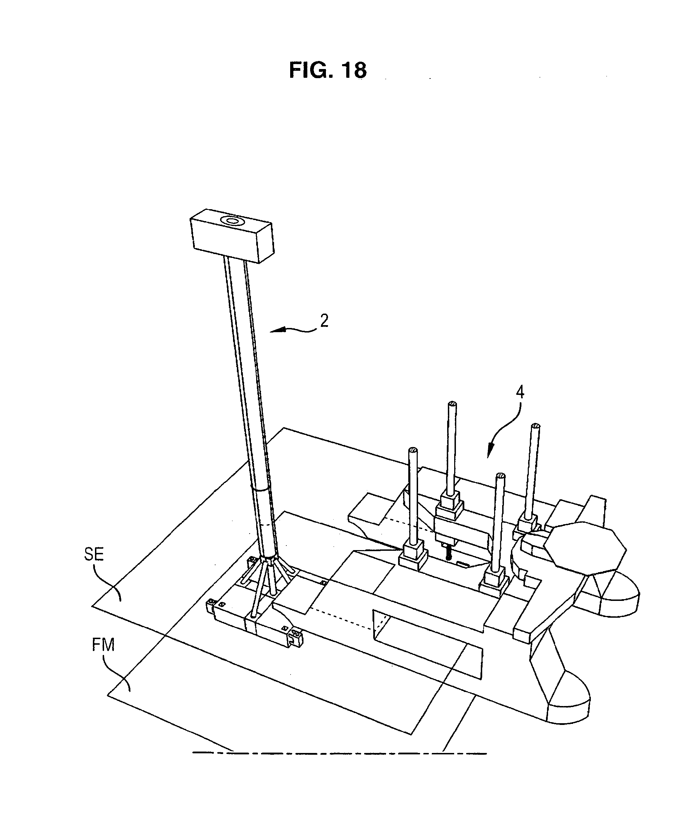

Dans une étape finale représentée à la figure 18, on procède alors au retrait du navire.

Le remplissage des ballasts d'air de la fondation par de l'eau de mer peut être déclenché à partir du navire avant son retrait, ou à l'aide d'un autre navire apte à venir accoster l'éolienne en réalisant une simple ouverture de vanne à proximité de la surface de l'eau SE.

## Revendications

1. Navire (4) de transport sur un site "offshore" d'une éolienne (2) pourvue d'une fondation (1) dite "gravitaire", c'est-à-dire apte à stabiliser l'éolienne (2) sur un fond marin (FM) sous l'effet de son propre poids additionné à celui de l'éolienne, ce navire (4) ayant, vu de dessus, la forme générale d'un "U", avec deux "branches" définissant des coques (40), ainsi qu'un pont de jonction (41) qui les relie, l'espace qui sépare ces coques (40) autorisant l'engagement dans celui-ci du mât (23) de l'éolienne (2), **caractérisé par le fait qu'**il comporte une pluralité de "piles" rigides et verticales (5), qui traversent de part en part ledit navire (4), leur extrémité inférieure étant pourvue de moyens déformables (6) de connexion à des complémentaires (8) portés par ladite fondation (1), ces piles (5) étant mobiles, à la demande, en direction verticale, de sorte que, par un mouvement de descente de ces piles (5), ladite éolienne (2) est guidée et stabilisée lors de ce mouvement descendant, et que, par un mouvement ascensionnel, lesdites piles (5) transmettent un mouvement ascendant à ladite éolienne (2).

2. Navire selon la revendication 1, **caractérisé par le fait que** lesdites piles (5) sont au nombre de quatre et sont positionnées, vues de dessus, aux quatre angles droits d'un quadrilatère fictif.

3. Navire selon l'une des revendications précédentes, **caractérisé par le fait que** lesdites piles (5) sont positionnées de telle sorte qu'elles bordent, pour certaines, ledit pont de jonction (41) et, pour les autres, lesdites coques (40).

4. Navire selon l'une des revendications précédentes, **caractérisé par le fait que** la longueur desdits moyens déformables de connexion (6) est déterminée de manière à ce que ces moyens compensent ou absorbent les mouvements du navire, de sorte que le « colis » constitué par l'éolienne (2) et sa fondation (1) reste « stable » pendant la mise en place de la fondation sur le site « offshore ».

5. Navire selon l'une des revendications précédentes, **caractérisé par le fait qu'**il comporte des moyens d'entrainement des dites piles (5) en translation verticale.

6. Navire selon la revendication 5, **caractérisé par le fait que** ces moyens comprennent des pignons qui engrènent avec des crémaillères (53) portées par lesdites piles (5).

7. Navire selon l'une des revendications précédentes, **caractérisé par le fait que** lesdits moyens déformables (6) consistent en des élingues.

8. Navire selon l'une des revendications précédentes, **caractérisé par le fait que** lesdits moyens déformables (6) sont pourvus à leur extrémité libre, d'un système de connexion (7) à ladite fondation (1), ces moyens étant de préférence automatiques et actionnés à distance.

9. Navire selon l'une des revendications précédentes, **caractérisé par le fait qu'**il comporte des moyens (44 ; 9) aptes à bloquer l'éolienne (2) pendant son transport.

10. Navire selon la revendication 9, **caractérisé par le fait que** lesdits moyens consistent en des canaux (44) formés dans la surface de la coque (40) et présentant une orientation verticale, avec une ouverture dirigée vers le bas, tandis que la fondation comporte autant d'organes saillants (9), ainsi disposés qu'ils s'engagent dans lesdits canaux (44) et viennent se verrouiller dans ceux-ci.

11. Navire selon l'une des revendications précédentes, **caractérisé par le fait qu'**il est de type semi-submersible.

12. Procédé de mise en place sur un site "offshore" d'implantation, d'une éolienne (2) pourvue d'une fondation (1) dite "gravitaire" c'est-à-dire apte à stabiliser l'éolienne (2) sur un fond marin (FM) sous l'effet de son propre poids additionné à celui de l'éolienne, à l'aide d'un navire (4) conforme à l'une des revendications 1 à 10, en combinaison avec la revendication 11, cette éolienne (2) reposant préalablement sur un site immergé, **caractérisé par le fait qu'**il comprend les étapes suivantes :
a/ déplacement du navire (4) jusqu'à ce que l'extrémité inférieure des piles (5) soit à l'aplomb ou sensiblement à l'aplomb des moyens complémentaires de connexion (8) portés par la fondation (1) ;
b/ descente des piles (5) et connexion des moyens déformables (6) auxdits moyens complémentaires (7 ; 8) ;
c/ remontée des piles avec l'éolienne connectée (2), la fondation (1) de cette dernière restant toujours au moins partiellement submergée ;
d/ déplacement dudit navire (4) vers le site d'implantation en augmentant son tirant d'eau pour améliorer sa stabilité ;
e/ positionnement du navire (4) à l'aplomb de l'emplacement d'implantation ;
f/ descente des piles (5) jusqu'à ce que la fondation (1) repose sur le fond marin ;
g/ déconnexion des moyens déformables (6) et retrait dudit navire (4).

13. Procédé selon la revendication 12, **caractérisé par le fait que**, entre les étapes d/ et e/, on augmente encore le tirant d'eau dudit navire (4).

14. Procédé selon l'une des revendications 12 ou 13, **caractérisé par le fait que** l'on augmente ledit tirant d'eau en remplissant d'eau des compartiments de ballastage que comporte le navire (4).

15. Procédé selon l'une des revendications 12 à 14, **caractérisé par le fait qu'**après ladite étape f/, on remplit des compartiments de ballastage que comporte la fondation (1).

## Patentansprüche

1. Schiff (4) für den Transport zu einem "Offshore"-Standort einer Windturbine (2), die mit einem Fundament (1) ausgestattet ist, das vom sogenannten "Schwerkraft"-Typ ist, was bedeutet, dass es dafür eingerichtet ist, die Windturbine (2) auf einem Meeresboden (FM) durch die Wirkung seines Eigengewichts, das zu dem der Windturbine hinzukommt, zu stabilisieren, wobei das Schiff (4) von oben gesehen die allgemeine Form eines "U" hat, mit zwei "Armen", die Schiffsrümpfe (40) definieren, sowie mit einer Verbindungsbrücke (41), die sie verbindet, wobei der Raum, der die Schiffsrümpfe (40) trennt, das Einbringen des Turms (23) der Windturbine (2) in diesen gestattet, **dadurch gekennzeichnet, dass** es mehrere stabile und senkrechte "Säulen" (5) umfasst, die durch das Schiff (4) hindurchgehen, wobei deren unteres Ende mit einem verformbaren Mittel (6) zur Verbindung mit komplementären Vorrichtungen (8) ausgestattet ist, die an dem Fundament (1) angebracht sind, wobei die Säulen (5) auf Anforderung in der senkrechten Richtung beweglich sind, und dies derart, dass durch eine Absenkbewegung der Säulen (5) die Windturbine (2) bei dieser absenkenden Bewegung geführt und stabilisiert wird und dass durch eine Aufwärtsbewegung die Säulen (5) eine aufsteigende Bewegung auf die Windturbine (2) übertragen.

2. Schiff nach Anspruch 1, **dadurch gekennzeichnet, dass** es vier Säulen (5) sind und dass sie von oben gesehen in den vier rechten Winkeln eines fiktiven Vierseits positioniert sind.

3. Schiff nach einem der vorhergehenden Ansprüche, **dadurch gekennzeichnet, dass** die Säulen (5) so positioniert sind, dass bestimmte von ihnen entlang der Verbindungsbrücke (41) angeordnet sind und die anderen entlang der Schiffsrümpfe (40) angeordnet sind.

4. Schiff nach einem der vorhergehenden Ansprüche, **dadurch gekennzeichnet, dass** die Länge des verformbaren Verbindungsmittels (6) derart festgelegt ist, dass dieses Mittel die Bewegungen des Schiffs kompensiert oder absorbiert, und dies derart, dass das "Paket", das aus der Windturbine (2) und ihrem Fundament (1) besteht, während des Aufstellens des Fundaments am "Offshore"-Standort "stabil" bleibt.

5. Schiff nach einem der vorhergehenden Ansprüche, **dadurch gekennzeichnet, dass** es ein Mittel zum Antreiben der Säulen (5) für vertikale Verschiebungen umfasst.

6. Schiff nach Anspruch 5, **dadurch gekennzeichnet, dass** das Mittel Zahnräder umfasst, die in Zahnstangen (53) eingreifen, die an den Säulen (5) angebracht sind.

7. Schiff nach einem der vorhergehenden Ansprüche, **dadurch gekennzeichnet, dass** das verformbare Mittel (6) aus einem Anschlagmittel besteht.

8. Schiff nach einem der vorhergehenden Ansprüche, **dadurch gekennzeichnet, dass** das verformbare Mittel (6) an seinem freien Ende mit einem System (7) zur Verbindung mit dem Fundament (1) ausgestattet ist, wobei dieses Mittel vorzugsweise automatisch und aus der Ferne zu betätigen ist.

9. Schiff nach einem der vorhergehenden Ansprüche, **dadurch gekennzeichnet, dass** es ein Mittel (44; 9) umfasst, das dafür eingerichtet ist, die Windturbine (2) während ihres Transports zu arretieren.

10. Schiff nach Anspruch 9, **dadurch gekennzeichnet, dass** das Mittel aus Kanälen (44) besteht, die an der Oberfläche des Schiffsrumpfs (40) ausgebildet sind und die eine vertikale Ausrichtung haben, wobei sie eine nach unten ausgerichtete Öffnung aufweisen, wohingegen das Fundament die gleiche Zahl hervorstehende Elemente (9) umfasst, die derart angeordnet sind, dass sie in die Kanäle (44) eingreifen und sich in diesen verriegeln.

11. Schiff nach einem der vorhergehenden Ansprüche, **dadurch gekennzeichnet, dass** es vom Halbtaucher-Typ ist.

12. Verfahren zum Aufstellen an einem "Offshore"-Aufstellungsstandort einer Windturbine (2), die mit einem Fundament (1) ausgestattet ist, das vom sogenannten "Schwerkraft"-Typ ist, was bedeutet, dass es dafür eingerichtet ist, die Windturbine (2) auf einem Meeresboden (FM) durch die Wirkung seines Eigengewichts, das zu dem der Windturbine hinzukommt, zu stabilisieren, und dies mittels eines Schiffs (4) nach einem der Ansprüche 1 bis 10 in Kombination mit Anspruch 11, wobei die Windturbine (2) zuvor auf einem überfluteten Standort sitzt, **dadurch gekennzeichnet, dass** es die folgenden Schritte umfasst:
a) Verlagern des Schiffes (4), bis das untere Ende der Säulen (5) sich senkrecht oder im Wesentlichen senkrecht über den komplementären Verbindungsmitteln (8), die am Fundament (1) angebracht sind, befindet;
b) Absenken der Säulen (5) und Verbinden des verformbaren Mittels (6) mit dem komplementären Mittel (7; 8);
c) Heraufziehen der Säulen mit der angekoppelten Windturbine (2), wobei das Fundament (1) letzterer noch wenigstens teilweise eingetaucht bleibt;
d) Verlagern des Schiffes (4) zum Aufstellungsstandort, wobei sein Tiefgang erhöht wird, um seine Stabilität zu verbessern;
e) Positionieren des Schiffs (4) senkrecht über dem Aufstellungsstandort;
f) Absenken der Säulen (5) bis das Fundament (1) auf dem Meeresboden aufsitzt;
g) Lösen des verformbaren Mittels (6) und Zurückziehen des Schiffes (4).

13. Verfahren nach Anspruch 12, **dadurch gekennzeichnet, dass** zwischen den Schritten d) und e) der Tiefgang des Schiffes (4) weiter erhöht wird.

14. Verfahren nach einem der Ansprüche 12 oder 13, **dadurch gekennzeichnet, dass** der Tiefgang dadurch erhöht wird, dass Ballastkammern, die das Schiff (4) umfasst, mit Wasser gefüllt werden.

15. Verfahren nach einem der Ansprüche 12 bis 14, **dadurch gekennzeichnet, dass** nach Schritt f) Ballastkammern gefüllt werden, die das Fundament (1) umfasst.

## Claims

1. A ship (4) for transporting to an "offshore" site a wind turbine (2) provided with a so-called "gravity" foundation (1), that is one able to stabilize the wind turbine (2) on a sea bottom (FM) under the influence of its own weight supplemented with that of the wind turbine, this ship (4) having, viewed from above, the general shape of a "U" with two "branches" defining hulls (40), as well as a junction bridge (41) connecting them, the space separating them (40) allowing the engagement within it of the pylon (23) of the wind turbine (2), **characterized by** the fact that it includes a plurality of rigid and vertical "piles" (5) passing clear through said ship (4), their lower end being provided with deformable arrangements (6) for connecting to matching arrangements (8) borne by said foundation (1), these piles (5) being movable on demand in a vertical direction so that, by a descending movement of these piles (5), said wind turbine (2) is guided and stabilized during this descending movement and that, by a rising movement, said piles (5) transmit a rising motion to said wind turbine (2).

2. A ship according to Claim 1, **characterized by** the fact that said piles (5) are four in number and are positioned, viewed from above, at the four square corners of the of a fictitious quadrilateral.

3. A ship according to one of the foregoing claims, **characterized by** the fact that said piles (5) are positioned in such a way that some are at the edge of said junction bridge (41) and the others at the edge of said hulls (40) .

4. A ship according to one of the foregoing claims, **characterized by** the fact that the length of said deformable connection arrangements (6) is determined so that the arrangements compensate for or absorb the motions of the ship, so that the "package" consisting of the wind turbine (2) and its foundation (1) remains "stable" during the placing of the foundation on the "offshore" site.

5. A ship according to one of the foregoing claims, **characterized by** the fact that it includes arrangements for driving said piles (5) in vertical translation.

6. A ship according to Claim 5, **characterized by** the fact that the arrangements include pinions which mesh with toothed racks (53) borne by said piles (5).

7. A ship according to one of the foregoing claims, **characterized by** the fact that said deformable arrangements (6) consist of slings.

8. A ship according to one of the foregoing claims, **characterized by** the fact that said deformable arrangements (6) are provided at their free end with a system (7) for connection to said foundation (1), these arrangements being preferably automatic and remotely operated.

9. A ship according to one of the foregoing claims, **characterized by** the fact that it includes arrangements (44; 9) capable of blocking the wind turbine (2) during its transportation.

10. A ship according to Claim 9, **characterized by** the fact that said arrangements consist of channels (44) formed in the surface of the hull (40) and having a vertical orientation, with a downward-directed opening, while the foundation has an equal number of protruding members (9), so disposed that they enter said channels (44) and are locked into them.

11. A ship according to one of the foregoing claims, **characterized by** the fact that it is of the semi-submersible type.

12. A method for placing, on an "offshore" installation site, a wind turbine (2) provided with a so-called "gravity" foundation (1), that is one that is able to stabilize the wind turbine (2) on a sea bed (FM) under the influence of its own weight supplemented by that of the wind turbine, using a ship (4) conforming to one of Claims 1 through 10, in combination with Claim 11, this wind turbine (2) previously resting on a submerged site, **characterized by** the fact that it includes the following steps:
a/ moving the ship (4) until the lower end of the piles (5) is vertically above or substantially above the matching connection arrangements (8) borne by the foundation (1);
b/ lowering the piles (5) and connection of the deformable arrangements (6) to said matching arrangements (7; 8);
c/ raising the piles with the connected wind turbine (2), the foundation (1) of the latter always remaining at least partially submerged;
d/ moving said ship (4) toward the installation site while increasing its draft to improve its stability;
e/ positioning the ship (4) vertically above the installation location;
f/ lowering the piles (5) until the foundation (1) rests on the sea bed;
g/ disconnection of the deformable arrangements (6) and withdrawal of said ship (4).

13. A method according to claim 12, **characterized by** the fact that, between steps d/ and e/, the draft of the ship (4) is increased still further.

14. A method according to one of Claims 12 or 13, **characterized by** the fact that said draft is increased by filling with water some ballast compartments built into the ship (4).

15. A method according to one of Claims 12 through 14, **characterized by** the fact that after said step f/, the ballast compartments built into the foundation (1) are filled with water.
